# EUROPÄISCHE PATENTANMELDUNG

(11) **EP 3 482 979 A1**
(43) Veröffentlichungstag der Anmeldung: **15.05.2019**
(21) Anmeldenummer: 18199211.6
(22) Anmeldetag: 09.10.2018
(51) Int. Cl.: B60G 17/052, B60G 99/00, B62D 33/06, F15B 13/04, F15B 13/07

(54) **DRUCKMITTELVERSORGUNG FÜR EINE NIVEAUREGELUNG**

(30) Priorität: 10.11.2017 DE 102017220089
(71) Anmelder: ZF Friedrichshafen AG, 88046 Friedrichshafen (DE)
(72) Erfinder: Nowotka, Thomas, 97494 Bundorf (DE); Memmel, Alfred, 97453 Schonungen (DE); Memmel, Georg, 97422 Schweinfurt (DE)

(57) **Zusammenfassung**

Druckmittelversorgung, umfassend eine Druckquelle, der ein Versorgungsventil nachgeschaltet ist, das wiederum mit einer Ventilanordnung zur Verteilung eines Druckmittels zu einer Mehrzahl von Stützaggregaten verbunden ist, wobei die Ventilanordnung ein einziges Verteilerventil zur selektiven Ansteuerung von mindestens drei Stützaggregaten umfasst.

## Beschreibung

Die Erfindung betrifft eine Druckmittelversorgung für eine Niveauregelung gemäß dem Oberbegriff von Patentanspruch 1.

Die EP 2 813 416 A2 beschreibt eine Druckmittelversorgung für eine Niveauregelung einer Fahrzeugkabine. In der Druckmittelversorgung ist ein mit einem Druckmittel gefüllter Speicher als Druckquelle enthalten, dem ein Versorgungsventil nachgeschaltet ist. Der Speicher dient als Puffer und wird von einer Pumpe oder einem Kompressor gespeist.

Dem Versorgungsventil sind mehrere Verteilerventile in einer Parallelschaltung nachgeordnet, d. h. jedes Verteilerventil ist mit dem Versorgungsventil verbunden und kann zwischen einer Durchlass-Stellung und einer Sperr-Stellung geschaltet werden. Die Verteilerventile regeln den selektiven Zustrom von Druckmedium ausgehend von dem Versorgungsventil zu Stützaggregaten, hier in der Ausführung von Luftfedern. In der EP 2 813 416 A2 umfasst jede Ausführungsvariante der Druckmittelversorgung mindestens ein Versorgungsventil und mindestens zwei Verteilerventile. Wenn die Druckmittelversorgung nur zwei Verteilerventile umfasst, dann sind grundsätzlich jeweils zwei Stützaggregate miteinander verbunden, unabhängig von der Schaltstellung des Versorgungsventils. Selbst wenn die Verteilerventile in eine Sperr-Stellung zu dem Versorgungsventil stehen, kann Druckmittel zwischen den beiden angeschlossenen Stützaggregaten ausgetauscht werden. Aufgrund der verbundenen Druckmedium-Volumen liegt bei einem gasförmigen Druckmedium eine Federrate vor, die von dem Gesamtdruckmedium-Volumen beider Stützaggregate gebildet wird. Ein weiterer Nachteil besteht darin, dass bei einer exzentrischen Schwerpunktlage ein Schiefstand der Kabine auftritt.

Die Aufgabe der vorliegenden Erfindung besteht darin, den apparativen Aufwand für die Druckmittelversorgung zu optimieren.

Die Aufgabe wird dadurch gelöst, dass die Ventilanordnung ein einziges Verteilerventil zur selektiven Ansteuerung von mindestens drei Stützaggregaten umfasst.

Die Einsparung zumindest eines Verteilerventils im Vergleich zum genannten Stand der Technik vereinfacht die Montage aufgrund der reduzierten Ventilzahl und der geringeren Anzahl der Leitungsabschnitte zwischen den Ventilen.

In weiterer vorteilhafter Ausgestaltung weist das Versorgungsventil eine Sperr-Stellung in Richtung des Verteilerventils auf. Über diese Sperrstellung können die Stützaggregate von der Druckquelle getrennt werden, so dass dann eine momentane Niveaulage praktisch eingefroren ist. Damit lässt sich z.B. eine Notbetriebsfunktion erfüllen.

Eine weitere Maßnahme zur Vereinfachung der Druckmittelversorgung besteht darin, dass das Versorgungsventil eine Ablass-Stellung für sämtliche Stützaggregate einnehmen kann. Damit kann man mit einem einzigen Ventil alle Stützelemente entleeren.

Gemäß einem vorteilhaften Unteranspruch weist das Verteilerventil eine Mehrzahl von Durchlass-Stellungen auf, in der jeweils ein Strömungskanal wechselseitig durchströmbar ist und Anschlüsse zu den weiteren Stützaggregaten blockiert sind. Über diese einfache Ventilausgestaltung kann trotzdem jedes Stützaggregat selektiv angesteuert werden.

Vorteilhafterweise ist das Verteilerventil als ein Drehschieberventil ausgeführt. Ein Drehschieberventil ist sehr einfach im Aufbau und kann über den Verstellbereich stufenlos verstellt werden.

In weiterer vorteilhafter Ausgestaltung ist das Verteilerventil elektromotorisch betätigbar. Mit einem Aktuator in der Bauform einer Magnetspule und einem Anker wäre der Aufwand deutlich größerer.

Als weitere Maßnahme zur Vereinfachung des Gesamtsystems werden zwei Stützaggregate über einen gemeinsamen Anschluss des Verteilerventils und zwei weitere Stützaggregate über jeweils separate Anschlüsse angesteuert. Dadurch reduziert sich die Anzahl der Schaltstellungen des Verteilerventils.

Optional können die beiden Stützaggregate an den separaten Anschlüssen jeweils eine angeschlossene Sensorik für die Erfassung der Niveaulage und die beiden Stützaggregate an dem gemeinsamen Anschluss eine gemeinsame Sensorik aufweisen. Die mögliche Abweichung zur optimalen Niveaumessung ist im Verhältnis zur Einsparung der Sensorik vernachlässigbar.

Anhand der folgenden Figurenbeschreibung soll die Erfindung näher erläutert werden.

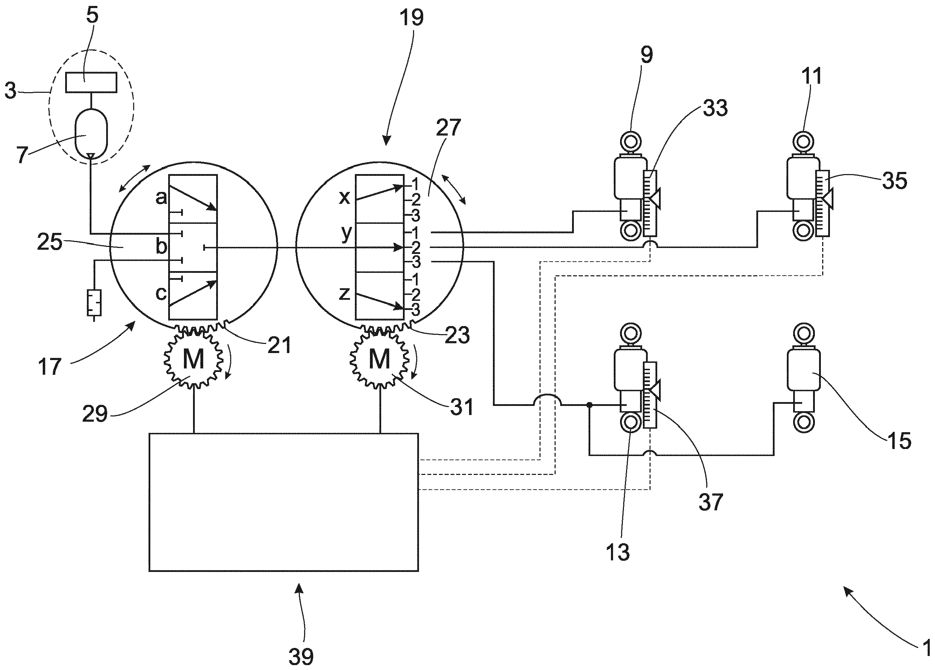

Die einzige Figur zeigt ein Ersatzschaubild eines Niveauregulierungssystems 1 mit einer Druckmittelversorgung 3, die in dieser Ausführungsform eine Druckquelle 5 in Form eines Kompressors in Kombination mit einem Speicher 7 umfasst. Grundsätzlich wäre auch eine hydraulische Druckmittelversorgung denkbar.

Der Druckmittelversorgung ist in Richtung einer Mehrzahl von Stützaggregaten 9-15, beispielsweise Luftfedern, ein Versorgungsventil 17 nachgeschaltet. Funktional zwischen dem Versorgungsventil 17 und den Stützaggregaten 9-15 ist ein einziges Verteilerventil 19 als Teil der gesamten Ventilanordnung 17; 19, die nur das Versorgungsventil 17 und das Verteilerventil 19 umfasst, angeordnet. Mit dem Verteilerventil 19 lassen sich mindestens drei Stützaggregate selektiv ansteuern, um die Niveaulage, z.B. einer Fahrzeugkabine einzustellen.

Das Versorgungsventil 17 ist als ein 3/3-Wegeventil ausgeführt und verfügt über eine Sperrstellung "b" in Richtung des Verteilerventils 19. Darüber lassen sich alle weiteren Strömungsverbindungen zu den Stützaggregaten 9-15 blockieren.

In einer Ablass-Stellung "c" kann das Druckmittel für sämtliche Stützaggregate 9-15 abgeführt werden. Bei einer Druckmittelversorgung mit Druckluft tritt die abgelassene Luft ins Freie aus.

Das Verteilerventil 19 weist eine Mehrzahl von Durchlass-Stellungen "x", "y", "z" auf, in der jeweils ein Strömungskanal wechselseitig durchströmbar ist und in der Anschlüsse "1"; "2"; "3" zu den weiteren Stützaggregaten 9-15 blockiert sind.

Das Verteilerventil 19 und auch das Versorgungsventil 17 sind als Drehschieberventile ausgeführt und werden elektromotorisch betätigt.

Stilisierte Zahnprofile 21; 23 an Ventilträgern 25; 27 und Elektromotoren 29; 31 soll die Drehschieberbauform darstellen.

Die beiden Stützaggregate 13; 15 sind über den gemeinsamen Anschluss "3" des Verteilerventils 19 ansteuerbar. Dabei handelt es sich bei einer Anwendung der Erfindung für eine Kabinenlagerung, um die beiden einer Kabinenfront gegenüber liegenden Stützaggregate 13; 15. Die beiden Stützaggregate 9; 11 im Bereich der Kabinenfront werden über jeweils separate Anschlüsse "1"; "2"gesteuert.

Die beiden Stützaggregate 9; 11 an den separaten Anschlüssen "1"; "2", also den Stützaggregaten im Bereich der Kabinenfront verfügen jeweils über eine eigene Sensorik 33-37 zur Erfassung der Niveaulage. Hingegen weisen die beiden Stützaggregate 13; 15 an dem gemeinsamen Anschluss "3" eine gemeinsame Sensorik 37 auf, die jedoch direkt einem der Stützelemente 13; 15 auch räumlich zugeordnet ist.

Bei einer Aktivierung der Druckmittelversorgung 3 nimmt das Versorgungsventil 17 ausgehend von der dargestellten Sperrstellung die Schaltstellung "a" ein, so dass dem Verteilerventil 19 Druckmittel zugeführt wird. Zeitlich parallel zur Aktivierung erfasst die Sensorik 33-37 an den Stützaggregaten 9-13 die jeweilige Niveaulage. Aus den Signalen der Sensoriken 33-37 berechnet eine Steuereinrichtung 39 die Niveauabweichung der Kabine zu einer Bezugsebene. In Abhängigkeit der Abweichung wird das Verteilerventil 19 über den Elektromotor 31 betätigt und gibt einen der Anschlüsse "1" - "3" mit dem Stützaggregat 9-13, dessen Sensorik eine Abweichung festgestellt hat, den Strömungskanal frei. Dabei nimmt das Verteilerventil 19 eine der Schaltstellungen "x", "y", oder "z" ein. Liegt bei allen Stützaggregaten innerhalb einer Toleranz die angestrebte Niveaulage vor, dann kann diese Niveaulage über das Versorgungsventil 17 fixiert werden. Die angestrebte Niveaulage muss bezogen auf eine Fahrbahn nicht immer parallel verlaufen. So kann z. B. ein Fahrzeug auf einer schiefen Ebene eine horizontale Kabinenabstützung verlangen, z. B. wenn die Kabine als Schlafkabine ausgestattet ist.

### Bezugszeichen

- 1: Niveauregulierungssystem
- 3: Druckmittelversorgung
- 5: Druckquelle
- 7: Speicher
- 9: Stützaggregat
- 11: Stützaggregat
- 13: Stützaggregat
- 15: Stützaggregat
- 17: Versorgungsventil
- 19: Verteilerventil
- 21: Zahnprofile
- 23: Zahnprofile
- 25: Ventilträger
- 27: Ventilträger
- 29: Elektromotoren
- 31: Elektromotoren
- 33: Sensorik
- 35: Sensorik
- 37: Sensorik
- 39: Steuereinrichtung

## Patentansprüche

1. Druckmittelversorgungseinrichtung, umfassend eine Druckquelle (5), der ein Versorgungsventil (17) nachgeschaltet ist, das wiederum mit einer Ventilanordnung (19) zur Verteilung eines Druckmittels zu einer Mehrzahl von Stützaggregaten (9-15) verbunden ist, **dadurch gekennzeichnet, dass** die Ventilanordnung ein einziges Verteilerventil (19) zur selektiven Ansteuerung von mindestens drei Stützaggregaten (9-15) umfasst.

2. Druckmittelversorgungseinrichtung nach Anspruch 1, **dadurch gekennzeichnet, dass** das Versorgungsventil (17) eine Sperr-Stellung ("b") in Richtung des Verteilerventil (19) aufweist.

3. Druckmittelversorgungseinrichtung nach Anspruch 1, **dadurch gekennzeichnet, dass** das Versorgungsventil (17) eine Ablass-Stellung ("c") für sämtliche Stützaggregate (9-15) einnehmen kann.

4. Druckmittelversorgungseinrichtung nach Anspruch 1, **dadurch gekennzeichnet, dass** das Verteilerventil (19) eine Mehrzahl von Durchlass-Stellungen ("x"; "y"; "z") aufweist, in der jeweils ein Strömungskanal wechselseitig durchströmbar ist und Anschlüsse ("1"; "2"; "3") zu den weiteren Stützaggregaten (9-15) blockiert sind.

5. Druckmittelversorgungseinrichtung nach Anspruch 1, **dadurch gekennzeichnet, dass** Verteilerventil (19) als ein Drehschieberventil ausgeführt ist.

6. Druckmittelversorgungseinrichtung nach Anspruch 1, **dadurch gekennzeichnet, dass** das Verteilerventil (19) elektromotorisch betätigbar ist.

7. Druckmittelversorgungseinrichtung nach Anspruch 1, **dadurch gekennzeichnet, dass** zwei Stützaggregate (13-15) über einen gemeinsamen Anschluss ("3") des Verteilerventils (19) und zwei weitere Stützaggregate (9; 11) über jeweils separate Anschlüsse ("1"; "2") angesteuert werden.

8. Druckmittelversorgungseinrichtung nach Anspruch 7, **dadurch gekennzeichnet, dass** die beiden Stützaggregate (9; 11) an den separaten Anschlüssen ("1"; "2") jeweils eine angeschlossene Sensorik (33-37) für die Erfassung der Niveaulage aufweisen und die beiden Stützaggregate (13; 15) an dem gemeinsamen Anschluss ("3") eine gemeinsame Sensorik (37) aufweisen.
